# EUROPEAN PATENT APPLICATION

(11) **EP 4 512 523 A1**
(43) Date of publication of application: **26.02.2025**
(21) Application number: 24177083.3
(22) Date of filing: 21.05.2024
(51) Int. Cl.: B01J 23/30, B01D 53/86, B01J 27/053, B01J 37/02

(54) **VANADIUM-TUNGSTEN-CERIUM SULFATE-TITANIA CATALYST AND METHOD FOR PREPARING THE SAME**

(30) Priority: 21.08.2023 KR 20230109300
(71) Applicant: Korea Institute of Science and Technology, Seoul (KR)
(72) Inventor: KWON, Dong-Wook, Seoul (KR); HA, Heon Phil, Seoul (KR); LEE, Hwajun, Seoul (KR); PARK, Yeon Jae, Seoul (KR)
(74) Representative: Crow, Martin

(57) **Abstract**

Provided is a vanadium-tungsten-cerium sulfate-titania catalyst and a method for preparing the same. The catalyst removes nitrogen oxides. The catalyst includes vanadium, tungsten, and cerium sulfate which are supported on a titania carrier, wherein the vanadium is included in an amount of approximately 0.5 wt% to approximately 5 wt% of the total weight of the catalyst, the tungsten is included in an amount of approximately 1 wt% to approximately 10 wt% of the total weight of the catalyst, and the cerium sulfate is included in the denitrification catalyst such that the cerium is to be approximately 1 wt% to approximately 10 wt% of the total weight of the catalyst.

## Description

### BACKGROUND

The present disclosure herein relates to a denitrification catalyst and a method for preparing the same, and more particularly to, a vanadium-tungsten-cerium sulfate-titania catalyst and a method for preparing the same.

Nitrogen oxides (NOx) are produced during a combustion process of thermal power plants, gas turbines, and industrial boilers and are included in exhaust gases and emitted into the atmosphere. In the atmosphere, nitrogen oxides cause acid rain and photochemical smog, and are particularly known to be a causative material of ultrafine dust generation by a secondary reaction. Selective catalytic reduction (hereinafter, referred to as "SCR") is the most widely used commercialized technology among technologies for reducing the emission of nitrogen oxides, and is a method for converting nitrogen oxides into nitrogen and water on a catalyst by injecting an ammonia reducing agent. A nitrogen oxide reduction process is generally represented by the following chemical reaction equation.

<Chemical Reaction Equation> 4NO + 4NH₃ + O₂ → 4N₂ + 6H₂O

Meanwhile, amid the growing demand for eco-friendly alternative fuels, there is a trend in the industry to increase the proportion of renewable energy generation. Particularly, biomass is a plant-derived product which is known to be an eco-friendly energy source due to the fact that it can reduce the emission of carbon dioxide, compared to traditional fossil fuels such as coal and oil. In order to cope with the field of power generation for carbon neutrality, biomass fuel conversion is being developed/commercialized in industry fields, and accordingly, there is a need for exhaust gas treatment technology in preparation for the fuel conversion. Potassium, an alkali metal included in the biomass, is included in fly ash in an amount of several to tens of wt% depending on the type of fuel. There is a problem in that such fly ash is adsorbed on the surface of a denitrification catalyst, and a catalyst activation site reacts with the alkali metal, thereby causing deactivation, which reduces denitrification performance. A potassium oxide adsorbed on the surface of the catalyst reacts at a V-OH group (Brønsted acid site), thereby substituting a hydrogen atom with a potassium atom, which is an irreversible reaction causing permanent deactivation. It has been attempted to suppress catalyst deactivation by installing a separate alkali metal removal facility in the beginning stage of an SCR process, but due to an alkali metal remaining downstream, it is not durable against poisoning of commercially available denitrification catalysts. Therefore, a denitrification catalyst which exhibits high-efficiency denitrification performance and has excellent durability against potassium is required.

### SUMMARY

The present disclosure provides a denitrification catalyst having durability against potassium which is discharged when biomass fuels are used.

The present disclosure also provides a method for preparing the denitrification catalyst.

An embodiment of the inventive concept provides a denitrification catalyst for removing nitrogen oxides. In an embodiment, the denitrification catalyst may be a vanadium-tungsten-cerium sulfate-titania catalyst. In an embodiment, the catalyst may include vanadium, tungsten, and cerium sulfate which are supported on a titania carrier, wherein the vanadium may be included in an amount of approximately 0.5 wt% to approximately 5 wt% of the total weight of the catalyst, the tungsten may be included in an amount of approximately 1 wt% to approximately 10 wt% of the total weight of the catalyst, and the cerium sulfate may be included in the denitrification catalyst such that the cerium is to be approximately 1 wt% to approximately 10 wt% of the total weight of the catalyst.

In an embodiment, the vanadium may be bound in the form of a vanadium oxide to the catalyst, wherein the vanadium oxide may be at least one among V₂O₃, VO₂, and V₂O₅, and the content of V₂O₃ and VO₂ included in the catalyst may be approximately 50% to approximately 65% of the total vanadium oxide.

In an embodiment, the cerium sulfate may have at least one form of Ce₂(SO₄)₃ and Ce(SO₄)₂, and the content of Ce₂(SO₄)₃ included in the catalyst may be approximately 60% to approximately 70% of the total cerium sulfate.

In an embodiment, the catalyst may further include oxygen species, wherein among the oxygen species, a surface oxygen species disposed on the surface of the catalyst may be approximately 20% to approximately 30% of the total oxygen species.

In an embodiment, the tungsten may be bound in the form of a tungsten oxide to the catalyst, and the tungsten oxide may be at least one of WO₂ or WO₃.

In an embodiment of the inventive concept, a method for preparing a denitrification catalyst includes preparing a vanadium aqueous solution including a vanadium precursor, preparing a tungsten aqueous solution including a tungsten precursor, preparing a cerium sulfate aqueous solution including a cerium sulfate precursor, preparing a slurry by mixing the vanadium aqueous solution, the tungsten aqueous solution, and the cerium sulfate aqueous solution with titania, and drying and calcining the slurry.

In an embodiment, the vanadium precursor may be ammonium metavanadate (NH₄VO₃), the tungsten precursor may be ammonium metatungstate hydrate ((NH₄)₆H₂W₁₂O₄₀·XH₂O), and the cerium sulfate precursor may be cerium(IV) sulfate tetrahydrate (Ce(SO₄)₂·4H₂O), wherein the vanadium precursor may be included such that the vanadium is approximately 0.5 wt% to approximately 5 wt% of the total weight of the catalyst, the tungsten precursor may be included such that the tungsten is approximately 1 wt% to approximately 10 wt% of the total weight of the catalyst, and the cerium sulfate precursor may be included such that the cerium is approximately 1 wt% to approximately 10 wt% of the total weight of the catalyst.

In an embodiment, the cerium sulfate precursor may also be referred to as a cerium precursor. In an embodiment, the cerium precursor in the inventive concept may contain a sulfur (S) component or a sulfate group (SO₄²⁻), so that cerium may be sulfated to form cerium sulfate.

In an embodiment of the inventive concept, a method for preparing a denitrification catalyst includes preparing a vanadium aqueous solution including a vanadium precursor, preparing a tungsten aqueous solution including a tungsten precursor, preparing a cerium sulfate aqueous solution including a cerium sulfate precursor, preparing a slurry by mixing the vanadium aqueous solution, the tungsten aqueous solution, and the cerium sulfate aqueous solution with titania, and drying and calcining the slurry.

In an embodiment, the method may further include adding oxalic acid to the vanadium aqueous solution after the preparing of the vanadium aqueous solution.

In an embodiment, the method may further include adding oxalic acid to the tungsten aqueous solution after the preparing of the tungsten aqueous solution.

In an embodiment, the calcining of the slurry may be performed for approximately 0.5 hours to approximately 10 hours at a temperature of approximately 300 °C to approximately 700 °C in a furnace in a gas atmosphere containing nitrogen and oxygen.

At least some of the above and other features of the disclosure are set out in the claims.

### BRIEF DESCRIPTION OF THE FIGURES

The accompanying drawings are included to provide a further understanding of the inventive concept, and are incorporated in and constitute a part of this specification. The drawings illustrate embodiments of the inventive concept and, together with the description, serve to explain principles of the inventive concept. In the drawings:
FIG. 1 is a graph showing the results of evaluating the denitrification performance of Preparation Example 1 and Comparative Preparation Examples 1 to 5 of the present invention, and catalysts obtained by adding K₂O to these Preparation Examples, wherein the evaluation was performed using an ammonia reducing agent;
FIG. 2 is a graph showing X-ray diffraction (XRD) patterns for Preparation Example 1 and Comparative Preparation Example 2 or 5 of the present invention, and catalysts obtained by adding K₂O to these Preparation Examples;
FIG. 3 is a graph showing the ratio of a surface oxygen species with respect to the total oxygen species by performing XPS analysis on Preparation Example 1 and Comparative Preparation Example 2 or 5 of the present invention, and catalysts obtained by adding K₂O to these Preparation Examples;
FIG. 4 is a graph showing the ratio of vanadium (V⁴⁺ + V³⁺) having an oxidation value corresponding to the sum of oxidation values of +4 and +3 in a vanadium oxide with respect to the total vanadium by using XPS analysis on Preparation Example 1 and Comparative Preparation Example 2 or 5 of the present invention, and catalysts obtained by adding K₂O to these Preparation Examples;
FIG. 5 is a graph showing the ratio of cerium (Ce³⁺) having an oxidation value corresponding to the sum of an oxidation value of +3 in a cerium oxide with respect to the total cerium by using XPS analysis on Preparation Example 1 and Comparative Preparation Example 5 of the present invention, and catalysts obtained by adding K₂O to these Preparation Examples;
FIG. 6A is a graph showing the ammonia desorption profile(temperature programmed desorption with NH₃ (NH₃-TPD)) for Preparation Example 1 and Comparative Preparation Example 2 or 5 of the present invention, and catalysts obtained by adding K₂O to these Preparation Examples;
FIG. 6B is a bar graph showing the desorption amount of ammonia obtained from NH₃-TPD for Preparation Example 1 and Comparative Preparation Example 2 or 5, and catalysts obtained by adding K₂O to these Preparation Examples;
FIG. 7 is a graph showing the results of evaluating the denitrification performance of Preparation Examples 2 to 6 of the present invention, and catalysts obtained by adding K₂O to these Preparation Examples, wherein the evaluation was performed using an ammonia reducing agent;
FIG. 8 is a graph showing the results of evaluating the denitrification performance of Preparation Examples 1 and 7 to 9 of the present invention, and catalysts obtained by adding K₂O to these Preparation Examples, wherein the evaluation was performed using an ammonia reducing agent;
FIG. 9 is a graph showing the results of evaluating the denitrification performance of Preparation Examples 1 and 10 to 12 of the present invention, and catalysts obtained by adding K₂O to these Preparation Examples, wherein the evaluation was performed using an ammonia reducing agent; and
FIG. 10 is a graph showing the results of evaluating the denitrification performance of catalysts prepared according to Preparation Example 1 and Comparative Preparation Example 2 of the present invention, the performance over time after the injection of sulfur dioxide.

### DETAILED DESCRIPTION

Hereinafter, the present invention will be described in detail with reference to the accompanying drawings so that those skilled in the art to which the present invention pertains may easily implement the present invention.

A denitrification catalyst according to an embodiment of the present invention removes nitrogen oxides. The denitrification catalyst according to the inventive concept is a vanadium-tungsten-cerium sulfate-titania catalyst. The denitrification catalyst includes vanadium, tungsten, and cerium sulfate which are supported on a titania carrier.

In the catalyst, if the content of the vanadium is less than approximately 0.5 wt%, the nitrogen oxide removal effect may be very low, and if greater than approximately 5.0 wt%, the nitrogen oxide removal efficiency may significantly decrease compared to the increase in the content of the vanadium.

The vanadium included in the catalyst has an oxidation value of +3, +4, or +5. That is, the vanadium is bound in the form of a vanadium oxide to the catalyst, and the vanadium oxide may be at least one among V₂O₃, VO₂, and V₂O₅. V₂O₃ has an oxidation value of vanadium of +3, VO₂ has an oxidation value of vanadium of +4, and V₂O₅ has an oxidation value of vanadium of +5. In the vanadium oxide included in the catalyst, the ratio of vanadium (V⁴⁺ + V³⁺) having an oxidation value corresponding to the sum of oxidation values of +4 and +3 with respect to the total vanadium is preferably approximately 40% to approximately 75%, more preferably approximately 50% to approximately 65%. That is, the content of V₂O₃ and VO₂ included in the catalyst may preferably be approximately 40% to approximately 75% of the total vanadium oxide, more preferably approximately 50% to approximately 65%.

The tungsten is preferably included in an amount of approximately 1 wt% to approximately 10 wt%, preferably approximately 4 wt% to approximately 6 wt%, based on the total weight of the catalyst. In the catalyst, if the content of the tungsten is less than approximately 1 wt%, the nitrogen oxide removal effect may be very low, and if greater than approximately 10 wt%, the nitrogen oxide removal efficiency may significantly decrease compared to the increase in the content of the tungsten. The oxidation value of tungsten included in the catalyst may be +4 or +6. The tungsten is bound in the form of a tungsten oxide to the catalyst, and the tungsten oxide may be at least one of WO₂ or WO₃. WO₂ may have an oxidation value of tungsten of +4, and WO₃ may have an oxidation value of tungsten of +6.

The cerium sulfate is included in the denitrification catalyst such that the cerium is preferably to be approximately 1 wt% to approximately 10 wt%, more preferably approximately 4.5 wt% to approximately 6.5 wt% based on the total weight of the catalyst. In the catalyst, if the content of the cerium is less than approximately 1 wt%, the nitrogen oxide removal effect may be very low, and if greater than approximately 10 wt%, the nitrogen oxide removal efficiency may significantly decrease compared to the increase in the content of the cerium.

The cerium included in the catalyst may be converted from a sulfur component of a cerium precursor into cerium sulfate by sulfation. The cerium has an oxidation value of +3 to +4. The cerium sulfate has at least one form of Ce₂(SO₄)₃, and Ce(SO₄)₂. Ce₂(SO₄)₃, the oxidation value of cerium is +3, and in Ce(SO₄)₂, the oxidation value of cerium is +4. In the total cerium sulfate(the sum of Ce₂(SO₄)₃, and Ce(SO₄)₂) included in the catalyst, the ratio of Ce₂(SO₄)₃, which has an oxidation value of cerium of +3, is preferably approximately 50% to 80%, more preferably 60% to 70%.

The catalyst may further include oxygen species. The oxygen species may also be referred to as oxygen atoms. The catalyst includes titania (a titanium oxide), a vanadium oxide, a tungsten oxide, and cerium sulfate, and among oxygen species present in the catalyst, a surface oxygen species disposed on the surface of the catalyst may preferably be approximately 15% to approximately 35%, more preferably approximately 20% to approximately 30%, based on the total oxygen species. The surface oxygen species may also be referred to as surface chemical oxygen species, surface adsorption oxygen species, or surface chemisorption oxygen species. In the denitrification catalyst according to the present invention, the surface oxygen species are approximately 20% to approximately 30% based on the total oxygen species, so that the activity is very high.

The vanadium-tungsten-cerium sulfate-titania catalyst, which is a denitrification catalyst according to the present invention, has an oxidation of vanadium, an oxidation of cerium, and a ratio of surface oxygen species in the above specific ranges, and thus, exhibits excellent nitrogen oxide removal performance in the range of approximately 250°C to approximately 450 °C.

A method for preparing a denitrification catalyst according to an embodiment of the inventive concept includes preparing a vanadium aqueous solution including a vanadium precursor, preparing a tungsten aqueous solution including a tungsten precursor, preparing a cerium sulfate aqueous solution including a cerium sulfate precursor, preparing a slurry by mixing the vanadium aqueous solution, the tungsten aqueous solution, and the cerium sulfate aqueous solution with titania, and drying and calcining the slurry.

A method for preparing a denitrification catalyst according to another embodiment of the inventive concept includes preparing a cerium sulfate-titania support by mixing a cerium sulfate aqueous solution with titania, drying and calcining the cerium sulfate-titania support, preparing a vanadium aqueous solution including a vanadium precursor, preparing a tungsten aqueous solution including a tungsten precursor, preparing a slurry by mixing the vanadium aqueous solution and the tungsten aqueous solution with the cerium sulfate-titania support, and drying and calcining the slurry.

The vanadium precursor may be ammonium metavanadate (NH₄VO₃), the tungsten precursor may be ammonium metatungstate hydrate ((NH₄)₆H₂W₁₂O_{40·}XH₂O), and the cerium sulfate precursor may be cerium(IV) sulfate tetrahydrate (Ce(SO₄)₂·4H₂O), wherein the vanadium precursor may be included such that the vanadium is approximately 0.5 wt% to approximately 5 wt% of the total weight of the catalyst, the tungsten precursor may be included such that the tungsten is approximately 1 wt% to approximately 10 wt% of the total weight of the catalyst, and the cerium sulfate precursor may be included such that the cerium is approximately 1 wt% to approximately 10 wt% of the total weight of the catalyst.

The method may further include adding oxalic acid to the vanadium aqueous solution after the preparing of the vanadium aqueous solution.

The method may further include adding oxalic acid to the tungsten aqueous solution after the preparing of the tungsten aqueous solution.

The calcining of the slurry may be performed for approximately 0.5 hours to approximately 10 hours at a temperature of approximately 300 °C to approximately 700 °C in a furnace in a gas atmosphere containing nitrogen and oxygen.

Specific preparation examples are as follows.

### Preparation Examples>

First, a vanadium precursor in an amount corresponding to approximately 2 wt% of vanadium based on the total weight of the catalyst is dissolved in distilled water to prepare a vanadium aqueous solution. At this time, ammonium metavanadate (NH₄VO₃) is used as a precursor of vanadium.

Then, a tungsten precursor in an amount corresponding to approximately 5 wt% of tungsten based on the total weight of the catalyst is dissolved in distilled water to prepare a tungsten aqueous solution. At this time, ammonium metatungstate hydrate ((NH₄)₆H₂W₁₂O_{40·}XH₂O) is used as a precursor of tungsten.

Then, a cerium precursor in an amount corresponding to approximately 5.5 wt% of cerium based on the total weight of the catalyst is dissolved in distilled water to prepare a cerium sulfate aqueous solution. At this time, cerium(IV) sulfate tetrahydrate (Ce(SO₄)_{2·}4H₂O is used as a precursor of cerium sulfate.

The prepared vanadium aqueous solution, the tungsten aqueous solution, and the cerium sulfate aqueous solution are mixed with titania to prepare a slurry, and the slurry is dried by rotary evaporation.

Thereafter, in order remove residual moisture contained in micropores of the catalyst, drying is performed for 24 hours using a dryer. A heat treatment process is performed on the dried sample in an air atmosphere. The heat treatment process is performed in a gas atmosphere containing nitrogen and oxygen for approximately 0.5 hours to approximately 10 hours at a temperature of approximately 300 °C to approximately 700 °C, preferably for approximately 5 hours at a temperature of approximately 500 °C. The heat treatment process may be performed in a tube-type furnace, a convection-type furnace, a grate-type furnace, or the like. In the above-described manner, it is possible to prepare a vanadium-tungsten-cerium sulfate-titania catalyst in which vanadium corresponding to approximately 2 wt%, tungsten corresponding to approximately 5 wt%, and cerium sulfate corresponding to approximately 5.5 wt% are supported on a titania carrier.

The vanadium-tungsten-cerium sulfate-titania catalyst according to the present invention may be processed in a particle form or a monolith form together with a small amount of a binder, may be prepared in the form of a plate, a slate, a pellet, or the like, or may be coated on a support processed in such a form and then used, but is not particularly limited.

In addition, in actual application, the vanadium-tungsten-cerium sulfate-titania catalyst according to the present invention may be coated on structures such as metal plates, metal fibers, ceramic filters, honeycombs, and glass tubes, or air purifiers, interior decorations, interior and exterior materials, wallpaper, etc., and then used, and may also be used in the final stage of an industrial process in which exhaust gases containing sulfur dioxide and alkali metals are generated.

In the vanadium-tungsten-cerium sulfate-titania catalyst, which is a denitrification catalyst prepared by the above-described method, an XPS (X-ray photoelectron spectroscopy) analysis technique may be used as a means to analyze the oxidation state of the supported vanadium and cerium sulfate. Through the XPS analysis, the oxidation state and distribution ratio of catalyst elements may be analyzed by separating the characteristic peak of each element present on the surface of the catalyst based on the intrinsic binding energy of an oxide including the element. At this time, each peak may be separated by the Gaussian-Lorentzian method. According to the XPS analysis, it has been confirmed that the denitrification catalyst according to the present invention added with tungsten and cerium sulfate, and including a vanadium oxide of +3 or +4 as an active material has excellent performance in converting nitrogen oxides into nitrogen in the region of 250 °C to 450 °C.

In addition, a temperature programmed desorption (TPD) analysis technique may be used to confirm adsorption/desorption properties of ammonia of the vanadium-tungsten-cerium sulfate-titania catalyst. Through the TPD analysis, it is possible to confirm the affinity of each catalyst and reaction gases, that is, the adsorption ability.

Hereinafter, specific experimental examples of the present invention will be described. The present invention may be more clearly understood by the following experimental examples, but these experimental examples are for illustrative purposes only and are not intended to limit the scope of the present invention.

### Preparation Example 1

In the preparation of a vanadium-tungsten-cerium sulfate-titania catalyst for removing nitrogen oxides, ammonium metavanadate (NH₄VO₃), a vanadium precursor, was quantified such that vanadium (V) was to be 2 wt% based on the total weight of the catalyst, and then dissolved in distilled water heated to 60 °C or higher to prepare a vanadium aqueous solution. In this case, oxalic acid ((COOH)₂) was added to the vanadium aqueous solution to increase the solubility of the vanadium precursor, at which time, the molar ratio of oxalic acid: vanadium was set to 1:1.

Subsequently, ammonium metatungstate hydrate ((NH₄)₆H₂W₁₂O_{40·}XH₂O), a tungsten precursor, was quantified such that tungsten (W) was to be 5 wt% based on the total weight of the catalyst, and then dissolved in distilled water heated to 60 °C or higher to prepare a tungsten aqueous solution. In this case, oxalic acid ((COOH)₂) was added to the tungsten aqueous solution to increase the solubility of the tungsten precursor, at which time, the molar ratio of oxalic acid:tungsten was set to 1:1.

Subsequently, cerium(IV) sulfate tetrahydrate (Ce(SO₄)₂4H₂O), a cerium precursor, was quantified such that cerium (Ce) was to be 5.5 wt% based on the total weight of the catalyst, and then dissolved in distilled water to prepare a cerium sulfate aqueous solution. Here, as a sulfur component, the cerium precursor Ce(SO₄)_{2·}4H₂O was used to apply sulfation.

The prepared vanadium aqueous solution, the tungsten aqueous solution, and the cerium sulfate aqueous solution were mixed with titania and prepared in the form of a slurry, and then moisture was removed using a vacuum rotary evaporator, and in order to completely remove moisture contained in micropores, drying was sufficiently performed for 24 hours or more in a dryer at 103 °C.

Thereafter, the mixture was calcined in an air atmosphere for 5 hours at a temperature of 500 °C in a convection-type furnace to prepare '2V-5W-5.5CeS/Ti'. In the '2V-5W-5.5CeS/Ti', 2V represents 2 wt% of vanadium, 5W represents 5 wt% of tungsten, 5.5Ce represents 5.5 wt% of cerium, and Ti represents a titania carrier. In the present specification, CeS represents cerium to which sulfur (S) is bound.

### Preparation Example 2

In the preparation of a vanadium-tungsten-cerium sulfate-titania catalyst for removing nitrogen oxides, cerium(IV) sulfate tetrahydrate (Ce(SO₄)₂·4H₂O), a cerium precursor, was quantified such that cerium (Ce) was to be 5.5 wt% based on the total about of the catalyst, and then dissolved in distilled water to prepare a cerium sulfate aqueous solution. The prepared cerium sulfate aqueous solution and titania were mixed and prepared in the form of a slurry. Here, as a sulfur component, the cerium precursor Ce(SO₄)_{2·}4H₂O was used to apply sulfation. Thereafter, moisture was removed using a vacuum rotary evaporator, and in order to completely remove moisture contained in micropores, drying was sufficiently performed for 24 hours or more in a dryer at 103 °C.

Thereafter, the mixture was calcined in an air atmosphere for 5 hours at a temperature of 300 °C in a convection-type furnace to prepare a cerium sulfate-titania support (hereinafter, 5.5CeS/Ti; This means that 5.5 wt% of cerium was added to the titania carrier based on the total weight of the catalyst, and 5.5Ce represents 5.5 wt% of cerium).

Subsequently, ammonium metavanadate (NH₄VO₃), a vanadium precursor, was quantified such that vanadium (V) was to be 2 wt% based on the total weight of the catalyst, and then dissolved in distilled water heated to 60 °C or higher to prepare a vanadium aqueous solution. In this case, oxalic acid ((COOH)₂) was added to the vanadium aqueous solution to increase the solubility of the vanadium precursor, at which time, the molar ratio of oxalic acid: vanadium was set to 1:1.

Subsequently, ammonium metatungstate hydrate ((NH₄)₆H₂W₁₂O_{40·}XH₂O), a tungsten precursor, was quantified such that tungsten (W) was to be 5 wt% based on the total weight of the catalyst, and then dissolved in distilled water heated to 60 °C or higher to prepare a tungsten aqueous solution. In this case, oxalic acid ((COOH)₂) was added to the tungsten aqueous solution to increase the solubility of the tungsten precursor, at which time, the molar ratio of oxalic acid:tungsten was set to 1:1.

The prepared vanadium aqueous solution and the tungsten aqueous solution were mixed with titania and prepared in the form of a slurry, and then moisture was removed using a vacuum rotary evaporator. In addition, in order to completely remove moisture contained in micropores, drying was sufficiently performed for 24 hours or more in a dryer at 103 °C.

Thereafter, the mixture was calcined in an air atmosphere for 5 hours at a temperature of 500 °C in a convection-type furnace to prepare '2V-5W/5.5CeS/Ti'. In the '2V-5W/5.5CeS/Ti', 2V represents 2 wt% of vanadium, 5W represents 5 wt% of tungsten, and 5.5CeS represents 5.5 wt% of cerium. Ti represents a titania carrier.

### Preparation Example 3

'2V-5W/5.5CeS/Ti' was prepared in the same manner as in Preparation Example 2, except that during the preparation process of the cerium sulfate-titania support of Preparation Example 2, calcination was performed in an air atmosphere for 5 hours at a temperature of 400 °C in a convection-type furnace.

### Preparation Example 4

'2V-5W/5.5CeS/Ti' was prepared in the same manner as in Preparation Example 2, except that during the preparation process of the cerium sulfate-titania support of Preparation Example 2, calcination was performed in an air atmosphere for 5 hours at a temperature of 500 °C in a convection-type furnace.

### Preparation Example 5

'2V-5W/5.5CeS/Ti' was prepared in the same manner as in Preparation Example 2, except that during the preparation process of the cerium sulfate-titania support of Preparation Example 2, calcination was performed in an air atmosphere for 5 hours at a temperature of 600 °C in a convection-type furnace.

### Preparation Example 6

'2V-5W/5.5CeS/Ti' was prepared in the same manner as in Preparation Example 2, except that during the preparation process of the cerium sulfate-titania support of Preparation Example 2, calcination was performed in an air atmosphere for 5 hours at a temperature of 700 °C in a convection-type furnace.

### Preparation Example 7

'2V-5W-2.75CeS/Ti' was prepared in the same manner as in Preparation Example 1, except that in the preparation process of the cerium aqueous solution in Preparation Example 1, the content of cerium was set to 2.75 wt% based on the total weight of the catalyst. In the '2V-5W-2.75CeS/Ti', 2V represents 2 wt% of vanadium, 5W represents 5 wt% of tungsten, 2.75Ce represents 2.75 wt% of cerium, and Ti represents a titania carrier.

### Preparation Example 8

'2V-5W-11CeS/Ti' was prepared in the same manner as in Preparation Example 1, except that in the preparation process of the cerium aqueous solution in Preparation Example 1, the content of cerium was set to 11 wt% based on the total weight of the catalyst. In the '2V-5W-1 ICeS/Ti', 2V represents 2 wt% of vanadium, 5W represents 5 wt% of tungsten, 1 ICe represents 11 wt% of cerium, and Ti represents a titania carrier.

### Preparation Example 9

'2V-5W-16.5CeS/Ti' was prepared in the same manner as in Preparation Example 1, except that in the preparation process of the cerium aqueous solution in Preparation Example 1, the content of cerium was set to 16.5 wt% based on the total weight of the catalyst. In the '2V-5W-16.5CeS/Ti', 2V represents 2 wt% of vanadium, 5W represents 5 wt% of tungsten, 16.5Ce represents 16.5 wt% of cerium, and Ti represents a titania carrier.

### Preparation Example 10

'2V-5W-5.5CeS/Ti' was prepared in the same manner as in Preparation Example 1, except that in the preparation process of the cerium aqueous solution in Preparation Example 1, cerium(III) sulfate octahydrate (Ce₂(SO₄)_{3·}8H₂O) was quantified as a cerium precursor. In the '2V-5W-5.5CeS/Ti', 2V represents 2 wt% of vanadium, 5W represents 5 wt% of tungsten, 5.5Ce represents 5.5 wt% of cerium, and Ti represents a titania carrier.

### Preparation Example 11

'2V-5W-5.5Ce/Ti' was prepared in the same manner as in Preparation Example 1, except that in the preparation process of the cerium aqueous solution in Preparation Example 1, cerium nitrate hexahydrate (Ce(NO₃)_{3·}6H₂O) was quantified as a cerium precursor. '2V-5W-5.5Ce/Ti' was prepared in the same manner as in Preparation Example 1, except that a cerium precursor was changed so as not to contain sulfur.

Here, sulfation was applied through the addition of sulfuric acid (H₂SO₄) after the preparation of the catalyst. In the sulfation process, sulfuric acid (H₂SO₄), a sulfur precursor, was quantified such that sulfur (S) was to be 1.5 wt% based on the total weight of the catalyst, and then supported on the catalyst, and then moisture was removed using a vacuum rotary evaporator. In addition, in order to completely remove moisture contained in micropores, drying was sufficiently performed for 24 hours or more in a dryer at 103 °C.

Thereafter, the mixture was calcined in an air atmosphere for 5 hours at a temperature of 500 °C in a convection-type furnace to prepare '1.5S/2V-5W-5.5Ce/Ti'. In the '1.5S/2V-5W-5.5Ce/Ti', 1.5S represents 1.5 wt% of sulfur, 2V represents 2 wt% of vanadium, 5W represents 5 wt% of tungsten, 5.5Ce represents 5.5 wt% of cerium, and Ti represents a titania carrier.

### Preparation Example 12

'2V-5W-5.5Ce/Ti' was prepared in the same manner as in Preparation Example 1, except that in the preparation process of the cerium aqueous solution in Preparation Example 1, cerium nitrate hexahydrate (Ce(NO₃)_{3·}6H₂O) was quantified as a cerium precursor. '2V-5W-5.5Ce/Ti' was prepared in the same manner as in Preparation Example 1, except that a cerium precursor was changed so as not to contain sulfur.

Here, sulfation was applied through the addition of a sulfur dioxide (SO₂) gas after the preparation of the catalyst. The sulfation process prepared '2V-5W-5.5CeS/Ti' by exposure to 500 °C at a concentration of 500 ppm in an SO₂ + O₂ atmosphere. In the '2V-5W-5.5CeS/Ti', 2V represents 2 wt% of vanadium, 5W represents 5 wt% of tungsten, 5.5Ce represents 5.5 wt% of cerium, and Ti represents a titania carrier.

### Comparative Preparation Example 1

In the preparation of a vanadium-titania catalyst for removing nitrogen oxides, ammonium metavanadate (NH₄VO₃), a vanadium precursor, was quantified such that vanadium (V) was to be 2 wt% based on the total about of the catalyst, and then dissolved in distilled water heated to 60 °C or higher to prepare a vanadium aqueous solution. In this case, oxalic acid ((COOH)₂) was added to the vanadium aqueous solution to increase the solubility of the vanadium precursor, at which time, the molar ratio of oxalic acid: vanadium was set to 1:1.

The prepared vanadium aqueous solution was mixed with titania and prepared in the form of a slurry, and then moisture was removed using a vacuum rotary evaporator. In addition, in order to completely remove moisture contained in micropores, drying was sufficiently performed for 24 hours or more in a dryer at 103 °C.

Thereafter, the mixture was calcined in an air atmosphere for 5 hours at a temperature of 500 °C in a convection-type furnace to prepare '2V/Ti'. In the '2V/Ti', 2V represents 2 wt% of vanadium, and Ti represents a titania carrier.

### Comparative Preparation Example 2

In the preparation of a vanadium-tungsten-titania catalyst for removing nitrogen oxides, ammonium metavanadate (NH₄VO₃), a vanadium precursor, was quantified such that vanadium (V) was to be 2 wt% based on the total about of the catalyst, and then dissolved in distilled water heated to 60 °C or higher to prepare a vanadium aqueous solution. In this case, oxalic acid ((COOH)₂) was added to the vanadium aqueous solution to increase the solubility of the vanadium precursor, at which time, the molar ratio of oxalic acid: vanadium was set to 1:1.

Subsequently, ammonium metatungstate hydrate ((NH₄)₆H₂W₁₂O_{40·}XH₂O), a tungsten precursor, was quantified such that tungsten (W) was to be 5 wt% based on the total weight of the catalyst, and then dissolved in distilled water heated to 60 °C or higher to prepare a tungsten aqueous solution. In this case, oxalic acid ((COOH)₂) was added to the tungsten aqueous solution to increase the solubility of the tungsten precursor, at which time, the molar ratio of oxalic acid:tungsten was set to 1:1.

The prepared vanadium aqueous solution and the tungsten aqueous solution were mixed with titania and prepared in the form of a slurry, and then moisture was removed using a vacuum rotary evaporator. In addition, in order to completely remove moisture contained in micropores, drying was sufficiently performed for 24 hours or more in a dryer at 103 °C.

Thereafter, the mixture was calcined in an air atmosphere for 5 hours at a temperature of 500 °C in a convection-type furnace to prepare '2V-5W/Ti'. In the '2V-5W/Ti', 2V represents 2 wt% of vanadium, 5W represents 5 wt% of tungsten, and Ti represents a titania carrier.

### Comparative Preparation Example 3

In the preparation of a vanadium-cerium-titania catalyst for removing nitrogen oxides, ammonium metavanadate (NH₄VO₃), a vanadium precursor, was quantified such that vanadium (V) was to be 2 wt% based on the total about of the catalyst, and then dissolved in distilled water heated to 60 °C or higher to prepare a vanadium aqueous solution. In this case, oxalic acid ((COOH)₂) was added to the vanadium aqueous solution to increase the solubility of the vanadium precursor, at which time, the molar ratio of oxalic acid: vanadium was set to 1:1.

Subsequently, cerium nitrate hexahydrate tetrahydrate (Ce(NO₃)_{2·}6H₂O), a cerium precursor, was quantified such that cerium (Ce) was to be 5.5 wt% based on the total weight of the catalyst, and then dissolved in distilled water to prepare a cerium aqueous solution.

The prepared vanadium aqueous solution and the cerium aqueous solution were mixed with titania and prepared in the form of a slurry, and then moisture was removed using a vacuum rotary evaporator. In addition, in order to completely remove moisture contained in micropores, drying was sufficiently performed for 24 hours or more in a dryer at 103 °C.

Thereafter, the mixture was calcined in an air atmosphere for 5 hours at a temperature of 500 °C in a convection-type furnace to prepare '2V-5.5Ce/Ti'. In the '2V-5.5Ce/Ti', 2V represents 2 wt% of vanadium, 5.5Ce represents 5.5 wt% of cerium, and Ti represents a titania carrier.

### Comparative Preparation Example 4

'2V-5.5CeS/Ti' was prepared in the same manner as in Comparative Preparation Example 3, except that in the preparation process of the cerium aqueous solution in Comparative Preparation Example 3, cerium(IV) sulfate tetrahydrate (Ce₂(SO₄)_{2·}4H₂O) was quantified as a cerium precursor. Here, as a sulfur component, the cerium precursor Ce(SO₄)_{2·}4H₂O was used to apply sulfation. In the '2V-5.5CeS/Ti', 2V represents 2 wt% of vanadium, 5.5Ce represents 5.5 wt% of cerium, and Ti represents a titania carrier.

### Comparative Preparation Example 5

In the preparation of a vanadium-tungsten-cerium-titania catalyst for removing nitrogen oxides, ammonium metavanadate (NH₄VO₃), a vanadium precursor, was quantified such that vanadium (V) was to be 2 wt% based on the total about of the catalyst, and then dissolved in distilled water heated to 60 °C or higher to prepare a vanadium aqueous solution. In this case, oxalic acid ((COOH)₂) was added to the vanadium aqueous solution to increase the solubility of the vanadium precursor, at which time, the molar ratio of oxalic acid: vanadium was set to 1: 1.

Subsequently, ammonium metatungstate hydrate ((NH₄)₆H₂W₁₂O_{40·}XH₂O), a tungsten precursor, was quantified such that tungsten (W) was to be 5 wt% based on the total weight of the catalyst, and then dissolved in distilled water heated to 60 °C or higher to prepare a tungsten aqueous solution. In this case, oxalic acid ((COOH)₂) was added to the tungsten aqueous solution to increase the solubility of the tungsten precursor, at which time, the molar ratio of oxalic acid:tungsten was set to 1:1.

Subsequently, cerium nitrate hexahydrate tetrahydrate (Ce(NO₃)_{2·}6H₂O), a cerium precursor, was quantified such that cerium (Ce) was to be 5.5 wt% based on the total weight of the catalyst, and then dissolved in distilled water to prepare a cerium aqueous solution.

The prepared vanadium aqueous solution, the tungsten aqueous solution, and the cerium aqueous solution were mixed with titania and prepared in the form of a slurry, and then moisture was removed using a vacuum rotary evaporator. In addition, in order to completely remove moisture contained in micropores, drying was sufficiently performed for 24 hours or more in a dryer at 103 °C.

Thereafter, the mixture was calcined in an air atmosphere for 5 hours at a temperature of 500 °C in a convection-type furnace to prepare '2V-5W-5.5Ce/Ti'. In the '2V-5W-5.5Ce/Ti', 2V represents 2 wt% of vanadium, 5W represents 5 wt% of tungsten, 5.5Ce represents 5.5 wt% of cerium, and Ti represents a titania carrier.

### Preparation Example or Comparative Preparation Example + 1K₂O

In the present experiment, in order to determine the durability against potassium, an alkali metal produced when biomass fuels are used, K₂O was added to the catalysts prepared in Preparation Examples and/or Comparative Preparation Examples. The potassium oxide (K₂O) was added to be 1 wt% based on the total weight of each of the catalysts. That is, potassium nitrate (KNO₃), a potassium precursor, was quantified such that the content of potassium oxide (K₂O)) was to be 1 wt%, and then dissolved in distilled water to prepare a potassium aqueous solution. Each of the catalysts was added to the potassium aqueous solution and mixed to be prepared in the form of a slurry, and then moisture was removed using a vacuum rotary evaporator, and in order to completely remove moisture contained in micropores of the catalysts, drying was sufficiently performed 24 hours or more in a dryer at 103 °C.

Thereafter, the mixture was calcined in an air atmosphere for 5 hours at a temperature of 500 °C in a convection-type furnace to prepare 'Preparation Example or Comparative Preparation Example + 1K₂O'. In the 'Preparation Example or Comparative Preparation Example + 1K₂O', 1K₂O represents 1 wt% of potassium oxide.

### Preparation Example + 10K₂O

Potassium nitrate (KNO₃), a potassium precursor, was quantified such that the potassium oxide (K₂O) was to be 10 wt% based on the total weight of each of the catalysts prepared in Preparation Examples, and then dissolved in distilled water to prepare a potassium aqueous solution. Each of the catalysts was added to the potassium aqueous solution and mixed to be prepared in the form of a slurry, and then moisture was removed using a vacuum rotary evaporator, and in order to completely remove moisture contained in micropores, drying was sufficiently performed 24 hours or more in a dryer at 103 °C.

Thereafter, the mixture was calcined in an air atmosphere for 5 hours at a temperature of 500 °C in a convection-type furnace to prepare 'Preparation Example + 10K₂O'. In the 'Preparation Example + 10K₂O', 10K₂O represents 10 wt% of potassium oxide.

The catalysts prepared by the above-described Preparation Examples, and the contents of tungsten and cerium supported thereon are summarized in Table 1 below.

**[Table 1]**

| **Classificati ons** | **Tungsten content (wt%)** | **Cerium content (wt%)** | **Sulfation method** | **Catalyst** |
|---|---|---|---|---|
| Preparation Example 1 | 5 | 5.5 | Ce(SO₄)₂·4H₂O is used | 2V-5W-5.5CeS/Ti |
| Preparation Example 2 | 5 | 5.5 | Ce(SO₄)₂·4H₂O is used | 2V-5W/5.5CeS/Ti |
| Preparation Example 3 | 5 | 5.5 | Ce(SO₄)₂·4H₂O is used | 2V-5W/5.5CeS/Ti |
| Preparation Example 4 | 5 | 5.5 | Ce(SO₄)₂·4H₂O is used | 2V-5W/5.5CeS/Ti |
| Preparation Example 5 | 5 | 5.5 | Ce(SO₄)₂·4H₂O is used | 2V-5W/5.5CeS/Ti |
| Preparation Example 6 | 5 | 5.5 | Ce(SO₄)₂·4H₂O is used | 2V-5W/5.5CeS/Ti |
| Preparation Example 7 | 5 | 2.75 | Ce(SO₄)₂·4H₂O is used | 2V-5W-2.75CeS/Ti |
| Preparation Example 8 | 5 | 11 | Ce(SO₄)₂·4H₂O is used | 2V-5W-11CeS/Ti |
| Preparation Example 9 | 5 | 16.5 | Ce(SO₄)₂·4H₂O is used | 2V-5W-16.5CeS/Ti |
| Preparation Example 10 | 5 | 5.5 | Ce₂(SO₄)₃·8H₂O is used | 2V-5W-5.5CeS/Ti |
| Preparation Example 11 | 5 | 5.5 | H₂SO₄ is used | 1.5S/2V-5W-5.5Ce/Ti |
| Preparation Example 12 | 5 | 5.5 | Gas phase SO₂ is used | 2V-5W-5.5CeS/Ti |
| Comparativ e Preparation Example 1 | - | - | - | 2V/Ti |
| Comparativ e Preparation Example 2 | 5 | - | - | 2V-5W/Ti |
| Comparativ e Preparation Example 3 | - | 5.5 | - | 2V-5.5Ce/Ti |
| Comparativ e Preparation Example 4 | - | 5.5 | Ce(SO₄)₂·4H₂O is used | 2V-5.5CeS/Ti |
| Comparativ e Preparation Example 5 | 5 | 5.5 | - | 2V-5W-5.5Ce/Ti |

### Catalyst Evaluation Example 1

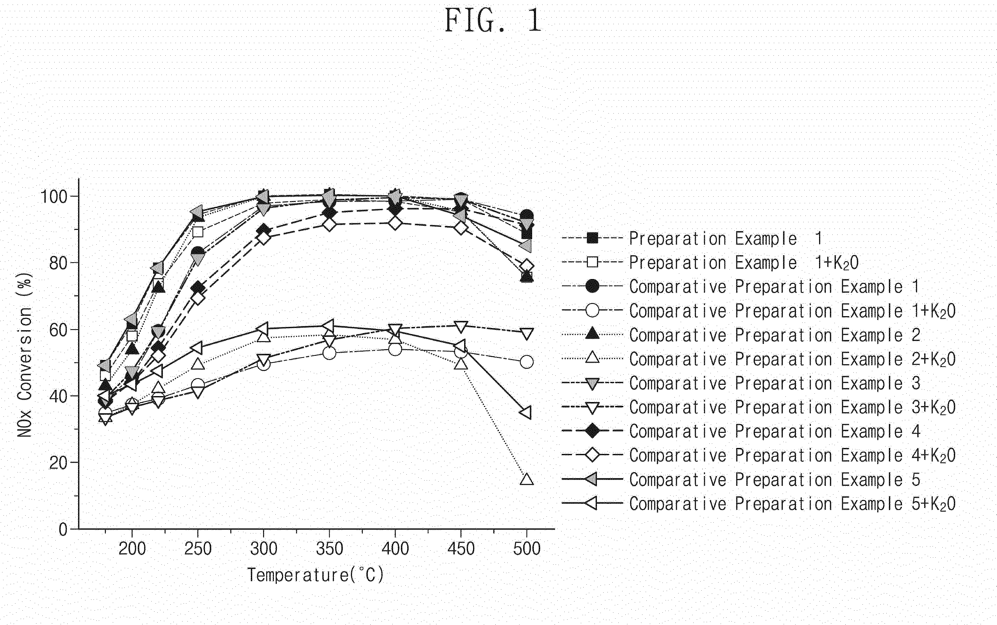

In the preparation of the catalyst of the present invention, in order to confirm the nitrogen oxide removal efficiency of the catalyst prepared according to each of Preparation Examples 1 to 12 and Comparative Preparation Examples 1 to 5, the conversion rate of NOx was measured to evaluate SCR reaction properties under the condition of a space velocity of 60,000 hr⁻¹, and the results are shown in FIG. 1 and the like below. Here, FIG. 1 shows the conversion rate of NOx according to a temperature in the catalysts.

### [Experiment conditions]

In an air atmosphere, a gas was injected into catalyst reactors respectively including the catalysts prepared according to Preparation Examples 1 to 12 and Comparative Preparation Examples 1 to 5. The gas contains a nitrogen oxide, ammonia, oxygen, and moisture. The concentration of the nitrogen oxide (NOx) in the gas was 800 ppm. The content of the ammonia in the gas corresponded to an amount that allows the equivalent ratio of the nitrogen oxide (NOx) to NH₃ to be 1:1. In the gas, the oxygen was 3 vol.%, and the moisture was 6 vol.%. The inflow flow rate of the gas was 500 cc/min, the space velocity was 60,000 hr⁻¹, and the experiment temperature range was 180 °C to 500 °C when the experiment was performed. For reference, the space velocity is an indicator of the amount of a target gas that a catalyst can process, and is represented by the volume ratio of the catalyst to the total gas flow rate.

### [Measurement method]

The conversion rate of a gaseous nitrogen oxide was calculated according to [Equation] below. In addition, the nitrogen conversion rate was calculated by measuring the concentration of nitrogen monoxide, which is generated when the injected gaseous nitrogen oxide is not reacted, by using a non-dispersive infrared gas analyzer (ZKJ-2, Fuji Electric Co.). Additionally, in order to measure NH₃ slip and NO₂ slip, which are generated when gaseous ammonia injected as a reducing agent is not reacted, or NO₂ generated by oxidation of NO, the concentration of the gaseous ammonia and the concentration of NO₂ were measured using a detection tube. Nitrogen oxide removal (%) = [Inlet NOx (ppm) - outlet NOx (ppm)] / Inlet NOx (ppm) × 100

FIG. 1 is a graph showing the results of evaluating the denitrification performance of Preparation Example 1 and Comparative Preparation Examples 1 to 5 of the present invention, and catalysts obtained by adding 1 wt% of K₂O to these Preparation Examples, wherein the evaluation was performed using an ammonia reducing agent.

As can be confirmed in FIG. 1, it can be confirmed that Preparation Example 1, Preparation Example 1 + K₂O, Comparative Preparation Example 2, and Comparative Preparation Example 5 exhibited excellent denitrification efficiency. Specifically, it can be confirmed that Preparation Example 1 (2V-5W-5.5CeS/Ti) exhibits the most excellent denitrification efficiency. Preparation Example 1 (2V-5W-5.5CeS/Ti), Preparation Example 1 + K₂O (1K₂O/2V-5W-5.5CeS/Ti), Comparative Preparation Example 2 (2V-5W/Ti), and Comparative Preparation Example 5 (2V-5W-5.5Ce/Ti) are all catalysts to which tungsten is added, and it can be confirmed that the addition of tungsten to the vanadium catalyst results in excellent denitrification efficiency. However, it can be confirmed that when potassium is added to Comparative Preparation Examples 1 to 5 except for Preparation Example 1, the denitrification efficiency significantly decreases.

### Catalyst Evaluation Example 2

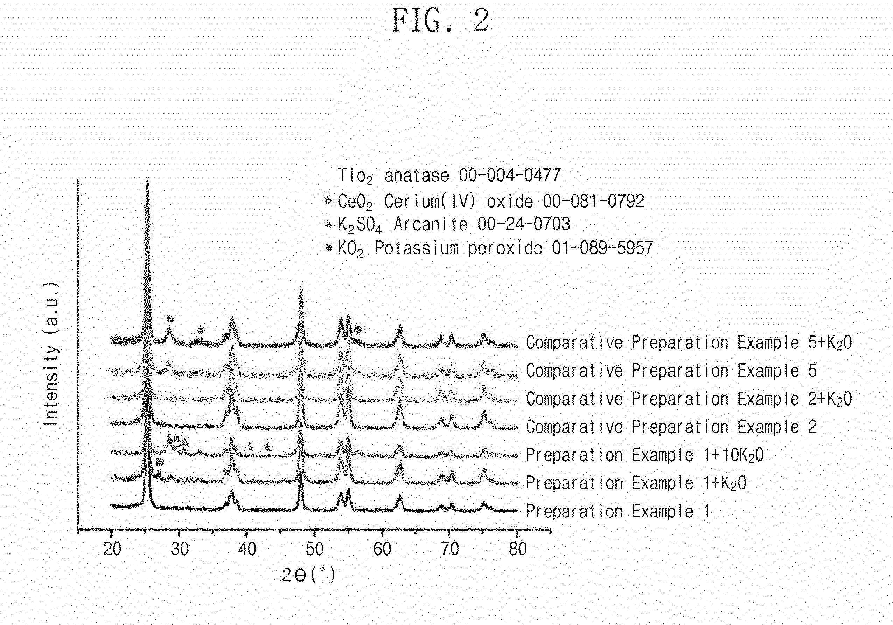

In the preparation of the catalyst according to the present invention, the results of X-ray diffraction pattern (XRD pattern) were analyzed with respect to Preparation Example 1 and Comparative Preparation Example 2 or 5, the catalyst obtained by adding 1 wt% or 10 wt% of K₂O to Preparation Example 1, and the catalyst obtained by adding 1 wt% of K₂O to Comparative Preparation Example 2 or 5, and are shown in FIG. 2.

Referring to the results of FIG. 2, in the case of Preparation Example 1, Comparative Preparation Example 2 (2V-5W/Ti), and Comparative Preparation Example 2 + K₂O, only the TiO₂ anatase peak is observed, so that it can be confirmed that each metal is evenly distributed on the support. In addition, in the case of Comparative Preparation Example 5 (2V-5W-5.5Ce/Ti) and Comparative Preparation Example 5 + K₂O, a CeO₂ peak was observed in addition to the TiO₂ anatase peak. Meanwhile, in the case of the catalyst of Preparation Example 1 + K₂O having durability against potassium, in addition to the TiO₂ anatase peak and the CeO₂ peak, KO₂ and K₂SO₄ peak were also observed. This shows that sulfur (S) on the catalyst is bound to potassium (K) to form K₂SO₄, thereby suppressing substitution of a -OH group of the catalyst caused by the potassium (K). In addition, the KO₂ peak is observed by suppressing the potassium oxide from being adsorbed on and highly dispersed in the catalyst. Here, in order to observe a peak appearing if a high content of potassium poisons a catalyst, the catalyst of Preparation Example 1 + 10K₂O was analyzed together. In this case, sulfur (S), which was present as cerium sulfate by the binding on the catalyst, is bound to potassium (K) to form CeO₂ and K₂SO₄, so that distinct peaks are observed.

### Catalyst Evaluation Example 3

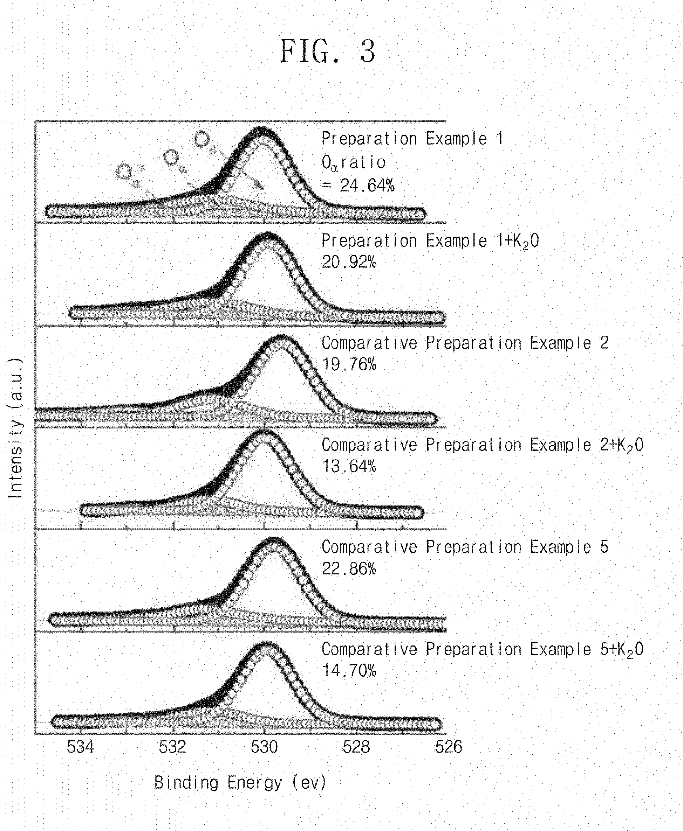

In the preparation of the catalyst of the present invention, the results of O 1s XPS were analyzed with respect to Preparation Example 1 and Comparative Preparation Example 2 or 5, and the catalysts obtained by adding 1 wt% of K₂O to these Preparation Examples, and are shown in FIG. 3. The O 1s peak in FIG. 3 was separated (deconvolution) into three regions. From left to right, it shows an oxygen species attributed to surface-adsorbed H₂O (O'_{α}), a surface adsorption oxygen species (O_{α}), and a lattice oxygen species (O_{β})

Referring to the results of FIG. 3, it shows the ratio of the surface adsorption oxygen species (O_{α}) among all of the oxygen species. The surface adsorption oxygen species (O_{α}) is known to an oxygen species having excellent reactivity on the surface of a catalyst, and may affect the usability of oxygen used in a SCR reaction. When confirming the ratio of surface adsorption oxygen species of the above-described catalysts, Preparation Example 1 (2V-5W-5.5CeS/Ti) exhibits 24.64%, Comparative Preparation Example 2 (2V-5W/Ti) exhibits 19.76%, Comparative Preparation Example 5 (2V-5W-5.5Ce/Ti) exhibits 22.86%, Preparation Example 1 + K₂O (1K₂O/2V-5W-5.5CeS/Ti) exhibits 20.92%, Comparative Preparation Example 2 + K₂O (1K₂O/2V-5W/Ti) exhibits 13.64%, and Comparative Preparation Example 5 + K₂O (1K₂O/2V-5W-Ce/Ti) exhibits 14.70% of the ratio of surface adsorption oxygen species. It can be confirmed that in Comparative Preparation Example 2 + K₂O and Comparative Preparation Example 5 + K₂O, in which there is a significant decrease in performance due to the addition of potassium, the ratio of surface adsorption oxygen species was significantly decreased, but in Preparation Example 1 + K₂O, which has durability against potassium, the decrease in the ratio of surface adsorption oxygen species was suppressed despite the addition of potassium.

### Catalyst Evaluation Example 4

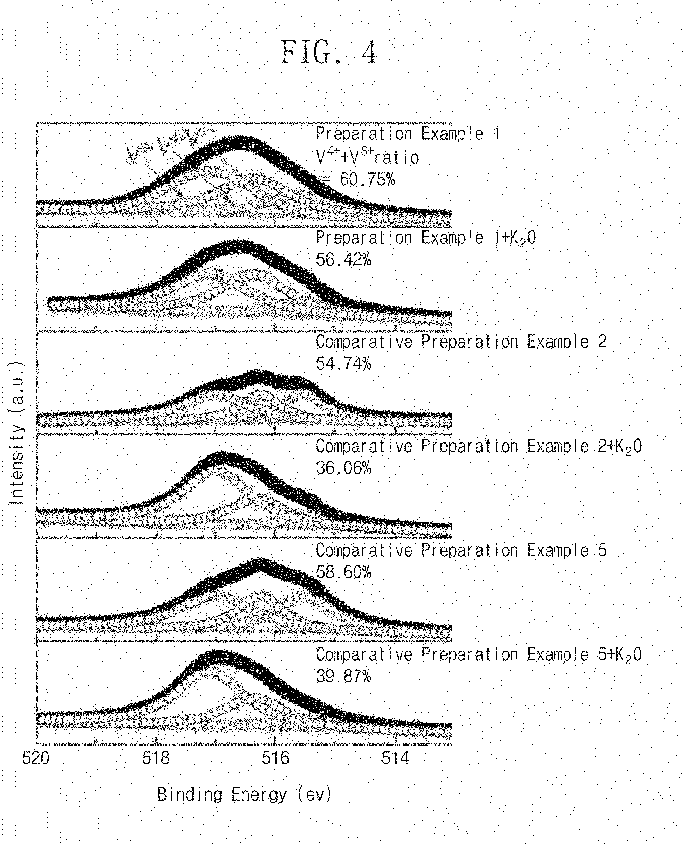

In the preparation of the catalyst of the present invention, the results of V 2p XPS were analyzed with respect to Preparation Example 1 and Comparative Preparation Example 2 or 5, and the catalysts obtained by adding 1 wt% of K₂O to these Preparation Examples, and are shown in FIG. 4. In the results of FIG. 4, the oxidation state of vanadium was divided into V⁵⁺, V⁴⁺, and V³⁺. When the oxidation state of vanadium is V⁵⁺, the vanadium is present in a stable state, and when present in a species other than V⁵⁺ (e.g., V⁴⁺ or V³⁺), the vanadium may act as a defect activation site, so that the reactivity between a reactant and the catalyst in the atmosphere may be promoted. In the vanadium oxide, the sum of ratios of vanadium V⁴⁺and V³⁺, which correspond to oxidation values of V⁴⁺and V³⁺, with respect to the total vanadium, is in the order of Preparation Example 1 (2V-5W-5.5CeS/Ti; 60.75%) > Comparative Preparation Example 5 (2V-5W-5.5Ce/Ti; 58.60%) > Preparation Example 1 + K₂O (1K₂O/2V-5W-5.5CeS/Ti; 56.42%) > Comparative Preparation Example 2 (2V-5W/Ti; 54.74%) > Comparative Preparation Example 5 + K₂O (1K₂O/2V-5W-5.5Ce/Ti; 39.87%) > Comparative Preparation Example 2 + K₂O (1K₂O/2V-5W/Ti; 32.06%). It can be confirmed that in Comparative Preparation Example 2 + K₂O and Comparative Preparation Example 5 + K₂O, in which there is a significant decrease in performance due to the addition of potassium, the ratio of vanadium (V⁴⁺+V³⁺) having an oxidation value corresponding to the sum of oxidation values of +4 and +3 with respect to the total vanadium was significantly decreased, but in Preparation Example 1 + K₂O, which has durability against potassium, the decrease in the ratio of vanadium V⁴⁺ and V³⁺ is not significant despite the addition of potassium.

### Catalyst Evaluation Example 5

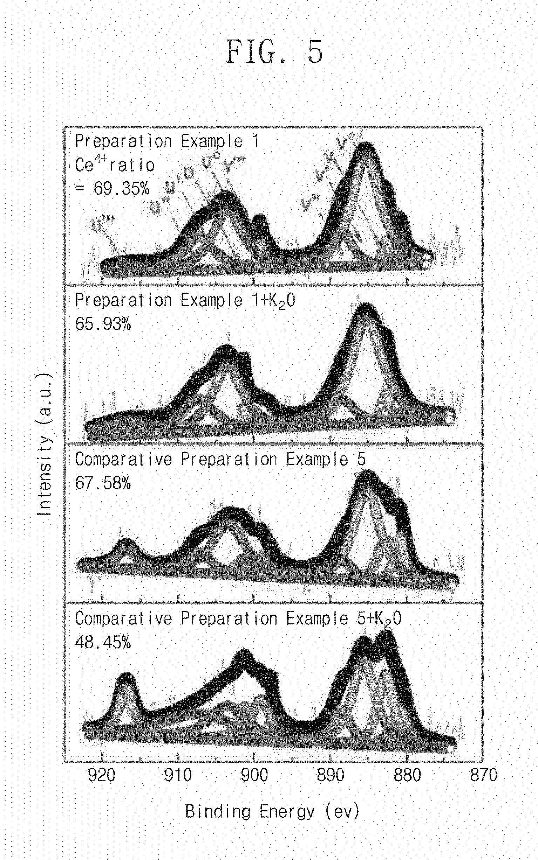

In the preparation of the catalyst of the present invention, the results of Ce 3d XPS were analyzed and separated by the Gaussian-Lorentzian method with respect to Preparation Example 1 and Comparative Preparation Example 5, and the catalysts obtained by adding 1 wt% of K₂O to these Preparation Examples, and are shown in FIG. 5. FIG. 5 shows the ratio of cerium (Ce³⁺) having an oxidation value corresponding to the sum of an oxidation value of +3 with respect to the total cerium present on the surface of the catalyst, which is in the order of Preparation Example 1 (2V-5W-5.5CeS/Ti; 69.35%) > Comparative Preparation Example 5 (2V-5W-5.5Ce/Ti; 67.58%) > Preparation Example 1 + K₂O (1K₂O/2V-5W-5.5CeS/Ti; 65.93%) > Comparative Preparation Example 5 + K₂O (1K₂O/2V-5W-5.5Ce/Ti; 48.45%). It can be confirmed that in Comparative Preparation Example 5 + K₂O, in which there is a significant decrease in performance due to the addition of potassium, the ratio of cerium (Ce³⁺) was significantly decreased, but in Preparation Example 1 + K₂O, which has durability against potassium, the decrease in the ratio of cerium (Ce³⁺) was not significant despite the addition of potassium.

### Catalyst Evaluation Example 6

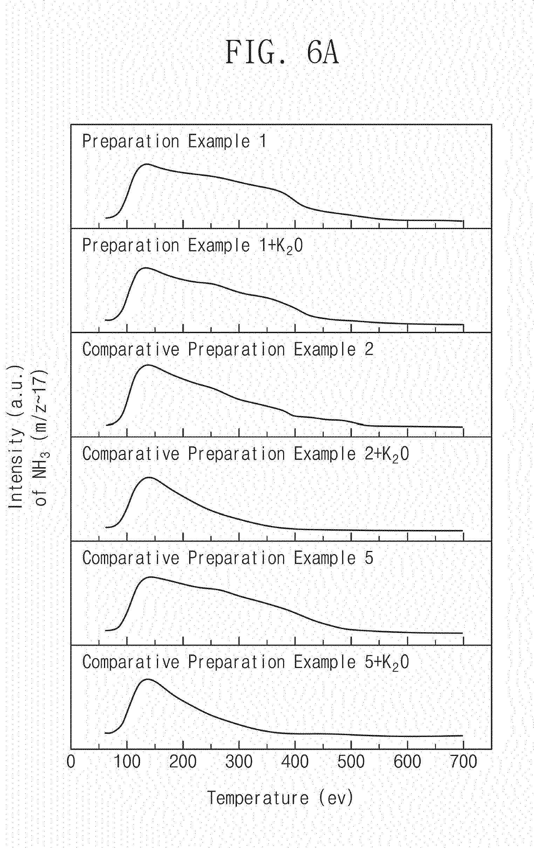

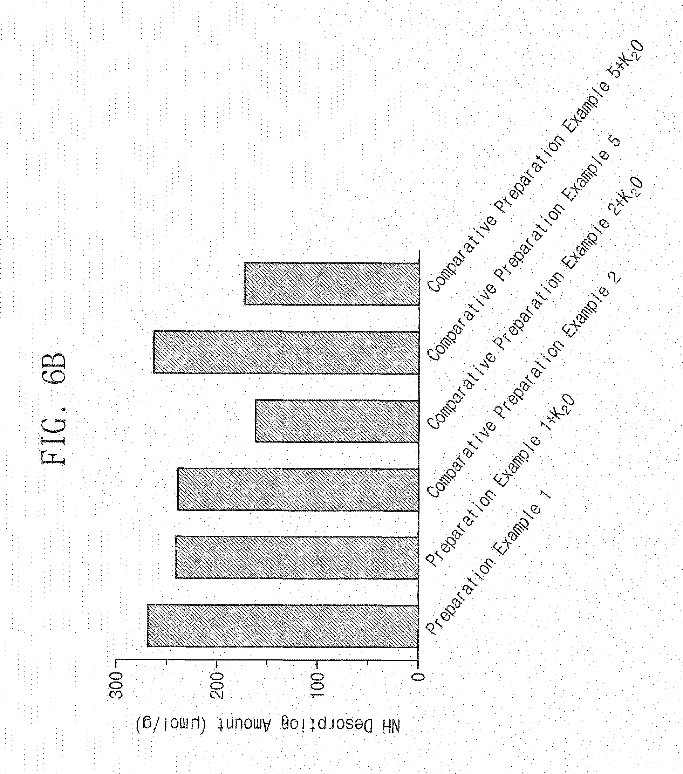

In the preparation of the catalyst of the present invention, NH₃-TPD analysis was conducted on Preparation Example 1 and Comparative Preparation Example 2 or 5, and the catalysts obtained by adding 1 wt% of K₂O to these Preparation Examples, and the results thereof are shown in FIG. 6A, FIG. 6B, and Table 2. FIG. 6A shows the NH₃-TPD profile of each catalyst, and FIG. 6B shows a bar graph of the desorption amount of NH₃, which is adsorbed on the catalyst, measured in FIG. 6A. In the case of Comparative Preparation Example 2 compared to Comparative Preparation 5, the adsorption (desorption) amount of NH₃ showed a tendency to increase due to the introduction of cerium, and in the case of Preparation Example 1 compared to Comparative Preparation Example 5, the adsorption(desorption) amount of NH₃ showed a tendency to increase due to the introduction of cerium sulfate. It can be confirmed that in the case of Preparation Example 1 + K₂O, the adsorption (desorption) amount of NH₃ slightly decreased due to the introduction of potassium, but in the case of Comparative Preparation Example 2 + K₂O and Comparative Preparation Example 5 + K₂O, the adsorption (desorption) amount of NH₃ was significantly decreased.

**[Table 2]**

| Catalyst | Preparation Example 1 | Preparation Example 1 + K₂O | Comparative Preparation Example 2 | Comparative Preparation Example 2 + K₂O | Comparative Preparation Example 5 | Comparative Preparation Example 5 + K₂O |
|---|---|---|---|---|---|---|
| ^{a}N_{NH3} (µmol_{NH3} g_{CAT-1}) | 269.3 | 241.1 | 239.6 | 162.2 | 263.6 | 172.8 |

| | | | | | | |
|---|---|---|---|---|---|---|
| *^{a}*via NH₃-TPD | | | | | | |

### Catalyst Evaluation Example 7

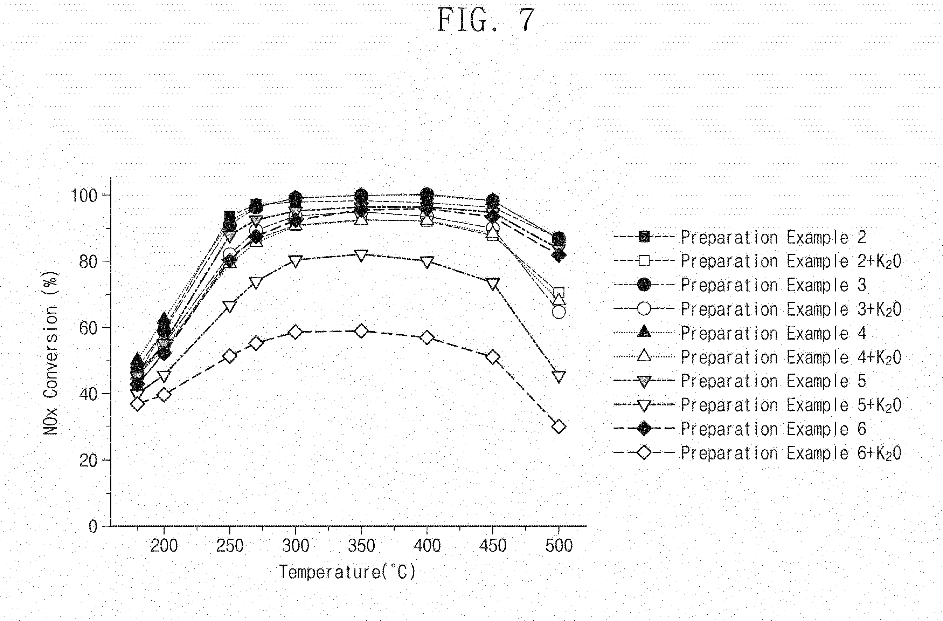

FIG. 7 shows the results of evaluating the denitrification performance of Preparation Examples 2 to 6, and catalysts obtained by adding 1 wt% of K₂O to these Preparation Examples, wherein the evaluation was performed using an ammonia reducing agent, and the conditions of the experiment were the same as those of Catalyst Evaluation Example 1. Although the types and contents of metal oxides included in the catalysts were the same, the catalysts were prepared by varying the calcination temperature of the 5.5CeS/Ti support.

Referring to FIG. 7, among them, there is no significant difference in the nitrogen oxide removal efficiency among Preparation Examples 2, 3 and 4, and there is no significant difference in the nitrogen oxide removal efficiency among Preparation Examples 2 + K₂O, 3 + K₂O, and 4 + K₂O, which are obtained by adding potassium to these Preparation Examples. However, referring to the nitrogen oxide removal rate of each of Preparation Examples 5 and 6, the denitrification performance is relatively degraded at 180 °C to 300 °C, and referring to the nitrogen oxide removal rate of Preparation Example 5 + K₂O and Preparation Example 6 + K₂O, it can be confirmed that the resistance against potassium is also significantly decreased. Therefore, it can be confirmed that as the calcining temperature (<600 °C) increases, the nitrogen oxide removal efficiency and the durability against potassium decrease.

The results of Ce 3d XPS were analyzed and separated by the Gaussian-Lorentzian method with respect to Preparation Examples 2 to 6, and the catalysts obtained by adding 1 wt% of K₂O to these Preparation Examples, and the results are shown in Table 3. Table 3 shows the ratio of cerium (Ce³⁺) having an oxidation value corresponding to the sum of an oxidation value of +3 with respect to the total cerium present on the surface of the catalyst, which is in the order of Preparation Example 2 (2V-5W/5.5CeS/Ti) 67.34%, Preparation Example 3 (2V-5W/5.5CeS/Ti) 67.76%, Preparation Example 4 (2V-5W/5.5CeS/Ti) 67.58%, Preparation Example 5 (2V-5W/5.5CeS/Ti) 65.24%, Preparation Example 6 (2V-5W/5.5CeS/Ti) 63.86%, Preparation Example 2 + K₂O (1K₂O/2V-5W/5.5CeS/Ti) 61.37%, Preparation Example 3 + K₂O (1K₂O/2V-5W/5.5CeS/Ti) 61.52%, Preparation Example 4 + K₂O (1K₂O/2V-5W/5.5CeS/Ti) 61.13%, Preparation Example 5 + K₂O (1K₂O/2V-5W/5.5CeS/Ti) 57.32%, and Preparation Example 6 + K₂O (1K₂O/2V-5W/5.5CeS/Ti) 49.75%. It can be confirmed that in Preparation Example 5 + K₂O and Preparation Example 6 + K₂O, in which there is a significant decrease in performance due to the addition of potassium, the ratio of cerium (Ce³⁺) was significantly decreased, but in Preparation Example 2 + K₂O to Preparation Example 4 + K₂O, which has durability against potassium, the decrease in the ratio of cerium (Ce³⁺) was not significant despite the addition of potassium.

**[Table 3]**

| Catalyst | Preparation Example 2 | Preparation Example 3 | Preparation Example 4 | Preparation Example 5 | Preparation Example 6 |
|---|---|---|---|---|---|
| *^{b}*Ce³⁺/(Ce⁴⁺+Ce³⁺ ) (%) | 67.34 | 67.67 | 67.58 | 65.24 | 63.86 |

| Catalyst | Preparation Example 2 + K₂O | Preparation Example 3 + K₂O | Preparation Example 4 + K₂O | Preparation Example 5 + K₂O | Preparation Example 6 + K₂O |
|---|---|---|---|---|---|
| *^{b}*Ce³⁺/(Ce⁴⁺+Ce³⁺ )(%) | 61.37 | 61.52 | 61.13 | 57.32 | 49.75 |

| | | | | | |
|---|---|---|---|---|---|
| *^{b}*via XPS | | | | | |

### Catalyst Evaluation Example 8

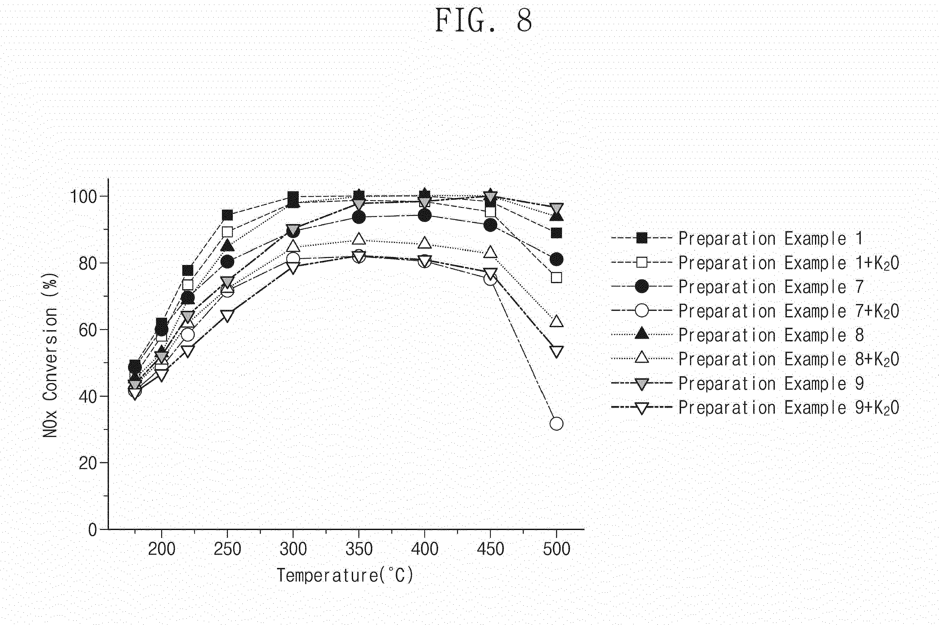

In FIG. 8, the nitrogen oxide removal efficiency was confirmed with respect to Preparation Examples 1 and 7 to 9, and the catalysts obtained by adding 1 wt% of K₂O to these Preparation Examples. The conditions of the experiment were the same as those of Catalyst Evaluation Example 1. Although the types and contents of metal oxides included in the catalysts were the same, the group of the catalysts was different in cerium content.

Referring to FIG. 8, among the catalysts prepared in various V:Ce molar ratios, it can be that Preparation Example 1 and Preparation Example 1 + K₂O, which have the molar ratio of (V:Ce=1: 1), exhibit the most excellent denitrification efficiency. Therefore, it can be confirmed that in the case of catalyst groups in which the content of cerium significantly deviates from the range of 5.5 wt%, the denitrification efficiency decreases.

### Catalyst Evaluation Example 9

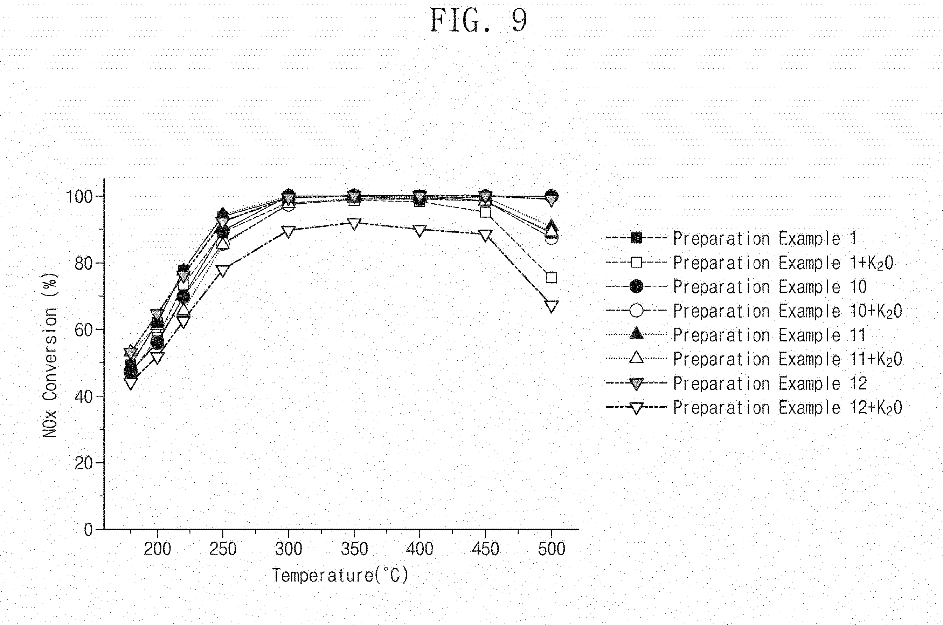

FIG. 9 is a graph showing the results of evaluating the denitrification performance of Preparation Examples 1 and 10 to 12 of the present invention, and catalysts obtained by adding K₂O to these Preparation Examples, wherein the evaluation was performed using an ammonia reducing agent. The conditions of the experiment in FIG. 9 were the same as those of Catalyst Evaluation Example 1. Although the types and contents of metal oxides included in the catalysts were the same, the catalysts were prepared by varying the sulfation process.

The catalysts were prepared by a method for quantifying and then sulfating cerium(IV) sulfate tetrahydrate (Ce(SO₄)₂·4H₂O), a cerium precursor, a method for quantifying and then sulfating cerium(III) sulfate octahydrate (Ce₂(SO₄)₃-8H₂O), a cerium precursor, a method for quantifying cerium nitrate hexahydrate (Ce(NO₃)₃·6H₂O), a cerium precursor, and then sulfating the same through sulfuric acid (H₂SO₄) support, and a method for quantifying cerium nitrate hexahydrate (Ce(NO₃)₃·6H₂O), a cerium precursor, and then sulfating the same using a sulfur dioxide (SO₂) gas. Preparation Example 1 + K₂O, the catalyst prepared by quantifying and then sulfating cerium(IV) sulfate tetrahydrate (Ce(SO₄)₂·4H₂O), exhibited a decrease in performance of about 5%, Preparation Example 10 + K₂O, the catalyst prepared by quantifying and then sulfating cerium(III) sulfate octahydrate (Ce₂(SO₄)₃·8H₂O), exhibited a decrease in performance of about 5%, Preparation Example 11 + K₂O, the catalyst prepared by a sulfation method through sulfuric acid (H₂SO₄) support, exhibited a decrease in performance of about 10%, and Preparation Example 12 + K₂O, the catalyst prepared by a sulfation method using a sulfur dioxide (SO₂ gas, exhibited a decrease in performance of about 15%. Among them, it can be confirmed that Preparation Example 1, which is the catalyst prepared by the method for quantifying and then sulfating cerium(IV) sulfate tetrahydrate (Ce(SO₄)₂·4H₂O) shows the most excellent performance and the most excellent durability against potassium.

### Catalyst Evaluation Example 10

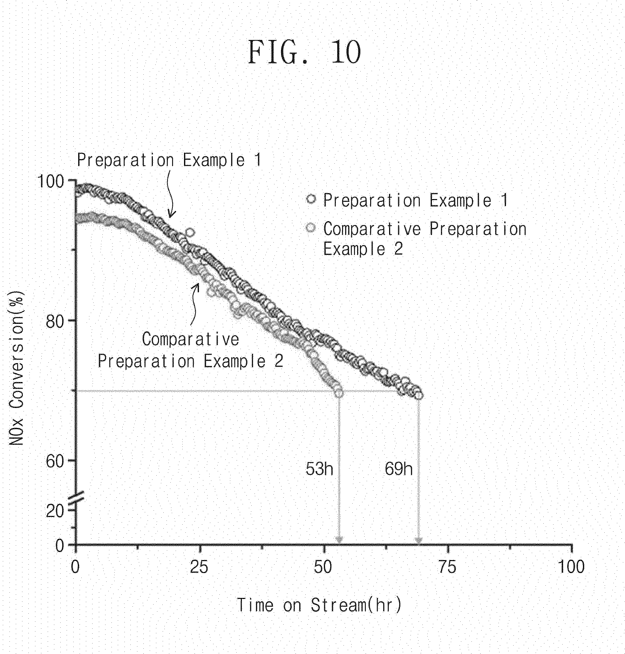

FIG. 10 is a graph showing the results of evaluating denitrification performance of catalysts prepared according to Preparation Example 1 and Comparative Preparation Example 2 of the present invention, the performance over time after the injection of sulfur dioxide. From the experiment in FIG. 10, a durability test against sulfur was conducted on Preparation Example 1 and Comparative Preparation Example 2. The durability of the catalyst against sulfur was confirmed using the time taken for the performance to decrease by 70% after the injection of a highly concentrated sulfur dioxide (SO₂). As a result, it has been confirmed that Preparation Example 1 shows better durability against sulfur dioxide (SO₂) than Comparative Preparation Example 2.

### [Experiment conditions]

In an air atmosphere, a gas was injected into catalyst reactors respectively including the catalysts prepared according to Preparation Example 1 and Comparative Preparation Example 2. The gas contains a nitrogen oxide, ammonia, oxygen, and moisture. The concentration of the nitrogen oxide (NOx) in the gas was 800 ppm. The content of the ammonia in the gas corresponded to an amount that allows the equivalent ratio of the nitrogen oxide (NOx) to NH₃ to be 1:1. The concentration of the sulfur dioxide (SO₂) in the gas was 500 ppm. In the gas, the oxygen was 3 vol.%, and the moisture was 6 vol.%. The inflow flow rate of the gas was 500 cc/min, the space velocity was 60,000 hr⁻¹, and the experiment temperature was 250 °C when the experiment was performed.

A vanadium-tungsten-cerium sulfate-titania catalyst according to embodiments of the present invention exhibits excellent nitrogen oxide removal performance in the temperature range of 250 °C to 450 °C and has excellent durability against potassium (K) contained in exhaust gases.

A method for preparing a denitrification catalyst according to embodiments of the present invention may prepare a vanadium-tungsten-cerium sulfate titanium catalyst which has excellent nitrogen oxide removal ability as well as durability against potassium.

Although the embodiments of the present invention have been described with reference to the accompanying drawings, it will be understood by those who have ordinary skills in the art to which the present invention pertains that the present invention may be embodied in other specific forms without changing the technical spirit or essential features thereof. It is therefore to be understood that the above-described embodiments are illustrative in all aspects and not restrictive.

## Claims

1. A vanadium-tungsten-cerium sulfate-titania catalyst comprising vanadium, tungsten, and cerium sulfate supported on a titania carrier, and being used as a denitrification catalyst for removing nitrogen oxides, wherein:
the vanadium is included in an amount of approximately 0.5 wt% to approximately 5 wt% of the total weight of the catalyst;
the tungsten is included in an amount of approximately 1 wt% to approximately 10 wt% of the total weight of the catalyst; and
the cerium sulfate is included in the denitrification catalyst such that the cerium is to be approximately 1 wt% to approximately 10 wt% of the total weight of the catalyst.

2. The vanadium-tungsten-cerium sulfate-titania catalyst of claim 1, wherein the vanadium is bound in the form of a vanadium oxide to the catalyst, wherein the vanadium oxide is at least one among V₂O₃, VO₂, and V₂O₅, and the content of V₂O₃ and VO₂ included in the catalyst is approximately 50% to approximately 65% of the total vanadium oxide.

3. The vanadium-tungsten-cerium sulfate-titania catalyst of claim 1, wherein the cerium sulfate has at least one form of Ce₂(SO₄)₃ and Ce(SO₄)₂, and the content of Ce₂(SO₄)₃ included in the catalyst is approximately 60% to approximately 70% of the total cerium sulfate.

4. The vanadium-tungsten-cerium sulfate-titania catalyst of claim 1, wherein the catalyst further comprises oxygen species, wherein among the oxygen species, a surface oxygen species disposed on the surface of the catalyst is approximately 20% to approximately 30% of the total oxygen species.

5. The vanadium-tungsten-cerium sulfate-titania catalyst of claim 1, wherein the tungsten is bound in the form of a tungsten oxide to the catalyst, and the tungsten oxide is at least one of WO₂ or WO₃.

6. A method for preparing a vanadium-tungsten-cerium sulfate-titania catalyst, the method comprising:
preparing a vanadium aqueous solution including a vanadium precursor;
preparing a tungsten aqueous solution including a tungsten precursor;
preparing a cerium sulfate aqueous solution including a cerium sulfate precursor;
preparing a slurry by mixing the vanadium aqueous solution, the tungsten aqueous solution, and the cerium sulfate aqueous solution with titania; and
drying and calcining the slurry.

7. The method of claim 6, wherein:
the vanadium precursor is ammonium metavanadate (NH₄VO₃);
the tungsten precursor is ammonium metatungstate hydrate ((NH₄)₆H₂W₁₂O₄₀·XH₂O); and
the cerium sulfate precursor is cerium(IV) sulfate tetrahydrate (Ce(SO₄)₂·4H₂O),
wherein:
the vanadium precursor is included such that the vanadium is approximately 0.5 wt% to approximately 5 wt% of the total weight of the catalyst;
the tungsten precursor is included such that the tungsten is approximately 1 wt% to approximately 10 wt% of the total weight of the catalyst; and
the cerium sulfate precursor is included such that the cerium is approximately 1 wt% to approximately 10 wt% of the total weight of the catalyst.

8. The method of claim 6, further comprising adding oxalic acid to the vanadium aqueous solution after the preparing of the vanadium aqueous solution.

9. The method of claim 6, further comprising adding oxalic acid to the tungsten aqueous solution after the preparing of the tungsten aqueous solution.

10. The method of claim 6, wherein the calcining of the slurry is performed for approximately 0.5 hours to approximately 10 hours at a temperature of approximately 300 °C to approximately 700 °C in a furnace in a gas atmosphere containing nitrogen and oxygen.

11. A method for preparing a vanadium-tungsten-cerium sulfate-titania catalyst, the method comprising:
preparing a cerium sulfate-titania support by mixing a cerium sulfate aqueous solution with titania;
drying and calcining the cerium sulfate-titania support;
preparing a vanadium aqueous solution including a vanadium precursor;
preparing a tungsten aqueous solution including a tungsten precursor;
preparing a slurry by mixing the vanadium aqueous solution and the tungsten aqueous solution with the cerium sulfate-titania support; and
drying and calcining the slurry.

12. The method of claim 11, wherein:
the vanadium precursor is ammonium metavanadate (NH₄VO₃);
the tungsten precursor is ammonium metatungstate hydrate ((NH₄)₆H₂W₁₂O₄₀·XH₂O); and
the cerium sulfate precursor is cerium(IV) sulfate tetrahydrate (Ce(SO₄)₂·4H₂O),
wherein:
the vanadium precursor is included such that the vanadium is approximately 0.5 wt% to approximately 5 wt% of the total weight of the catalyst;
the tungsten precursor is included such that the tungsten is approximately 1 wt% to approximately 10 wt% of the total weight of the catalyst; and
the cerium sulfate precursor is included such that the cerium is approximately 1 wt% to approximately 10 wt% of the total weight of the catalyst.

13. The method of claim 11, further comprising adding oxalic acid to the vanadium aqueous solution after the preparing of the vanadium aqueous solution.

14. The method of claim 11, further comprising adding oxalic acid to the tungsten aqueous solution after the preparing of the tungsten aqueous solution.

15. The method of claim 11, further comprising the calcining of the slurry is performed for approximately 0.5 hours to approximately 10 hours at a temperature of approximately 300 °C to approximately 700 °C in a furnace in a gas atmosphere containing nitrogen and oxygen.
